(19) **Europäisches Patentamt**

**European Patent Office**

**Office européen des brevets**

(11) Publication number: **0 086 658**
**B1**

(12) **EUROPEAN PATENT SPECIFICATION**

(45) Date of publication of patent specification: **27.05.87**

(51) Int. Cl.⁴: **G 11 B 5/09, G 11 B 15/52**

(21) Application number: **83300741.2**

(22) Date of filing: **15.02.83**

(54) Time base correcting apparatus.

(30) Priority: **15.02.82 JP 22290/82**

(43) Date of publication of application:
**24.08.83 Bulletin 83/34**

(45) Publication of the grant of the patent:
**27.05.87 Bulletin 87/22**

(84) Designated Contracting States:
**CH DE FR GB LI**

(56) References cited:
**BE-A- 890 231**
**US-A-4 145 683**

**RUNDFUNKTECHNISCHE MITTEILUNGEN, vol. 21, no. 2, April 1977, pages 68-76, Hamburg, DE. H. HOFMANN et al.: "Digitale Time-Base-Correctoren in der Videotechnik", page 72, complete chapter, 2.6: "Speicheransteurerung"**

(73) Proprietor: **SONY CORPORATION**
**7-35 Kitashinagawa 6-Chome Shinagawa-ku**
**Tokyo 141 (JP)**

(72) Inventor: **Watanabe, Nobuhiko c/o Patent Division**
**Sony Corporation 7-35 Kitashinagawa-6**
**Shinagawa-ku Tokyo (JP)**
Inventor: **Tanaka, Masato c/o Patent Division**
**Sony Corporation 7-35 Kitashinagawa-6**
**Shinagawa-ku Tokyo (JP)**

(74) Representative: **Thomas, Christopher Hugo et al**
**D Young & Co 10 Staple Inn**
**London WC1V 7RD (GB)**

Courier Press, Leamington Spa, England.

## Description

This invention relates to time base correcting apparatus, and more particularly to time base correcting apparatus for correcting time base errors in a digital signal which is formed of successive data blocks.

When a signal such as a video signal or an audio signal is modulated or converted into a pulse code modulated (PCM) signal to be recorded and reproduced, a time base correcting apparatus or corrector (hereinafter, simply referred to as a TBC) is used on the reproducing side. The function of the TBC is to remove time base errors or variations contained in the reproduced data. To this end, the reproduced data is written in a memory in synchronism with a clock pulse signal, and is then read-out under control of a reference clock pulse signal. When recording and reproducing an audio PCM signal, the encoding has provision for error correction, and in the PCM data a plurality of words and error detection (or correction) codes are used to form one block. A synchronizing signal is also added to each block, so that the data of each block is written in the memory of the TBC at its predetermined address. The output data from the TBC is supplied to an error correction decoder and a digital-to-analog (D/A) converter. For the purpose of performing these processing operations correctly, the order of the output data from the TBC must be coincident with that of the reproduced data.

A conventional TBC forms the write-in address on the basis of a synchronizing signal separated from the reproduced data. Since the synchronizing signal contained in the reproduced data is affected by dropout, noise and so on, the control of the write-in address based on this synchronizing signal is not completely reliable, and hence data may be written at the wrong block address with the result that the sequence of data read out from the memory differs from that of the reproduced data. Particularly when an interleave technique is used to deal with burst errors due to drop-out, the sequence of the reproduced data must be strictly coincident with that upon recording. When the synchronizing signal is separated from the reproduced data in the conventional TBC, it has been proposed to eliminate the influences of drop-out and noise, and then to derive only the correct synchronizing signal. However, this does not always operate satisfactorily.

Therefore, we have previously proposed in Belgian patent specification BE—A—890 231 (and corresponding UK patent · specification GB—A—2 084 363) a time base correcting apparatus capable of performing the correct control of the write-in address by adding the block address to every block, and writing the data of each block in the address of the TBC corresponding to this block address.

In a tape recorder to which this TBC is applied, discontinuity is caused in the phase of a servo control signal recorded on a magnetic tape due, for example, to splice-editing. Thus, a phase-locked loop (PLL) servo, by which upon reproduction the transporting of the magnetic tape is phase-locked to the reference signal, is made unstable by this discontinuity, giving rise to a problem that it takes a long settling time for the magnetic tape to become phase-locked to the reference signal. In order to solve this problem, a servo circuit is used in which a polyphase, for example a 4-phase signal is used as a reference signal, so as to enable the transportation of the magnetic tape to be phase-locked to any one phase of this 4-phase reference signal. When this polyphase servo circuit is employed, a plurality of phase relations are available between the reference signal and the reproduced data. Since the read-out address of the TBC is formed from the reference signal, then depending on the phase relation of the incoming data, it may appear that the time base errors are increased.

According to the present invention there is provided a time base correct apparatus for correcting time base errors in a digital signal supplied thereto in the form of successive data blocks, each data block including at least a plurality of data words and a block address which cycles with a predetermined phase relation to a reference signal, the apparatus comprising:

memory means having a plurality of addressable storage locations, each storing a respective data block;

write address generating means responsive to said block address for generating write-in addresses to identify particular storage locations into which the supplied data blocks are to be written;

write-in means for writing successive data blocks into those storage locations identified by said write address generating means;

read address generating means for generating read-out addresses to identify particular storage locations from which a stored data block is to be read out;

read-out means for reading out the contents of a storage location identified by said read address generating means; and

means contained in said write address generating means for varying said write-in address; characterised in that:

said varying means is operable to vary said write-in address in dependence on a lock mode signal, said lock mode signal indicating the phase relationship between the reference signal representing the sequence of block addresses in said digital signal and a further reference signal having a continuous time base so as to indicate the measure of discontinuity in the sequence of block addresses, said lock mode signal varying the write-in address to compensate for a discontinuity in the block address sequence such that the write-in address sequence is undisturbed.

The invention will now be described by way of example with reference to the accompanying drawings, throughout which like parts are referred to by like references, and in which:

Figure 1 is a diagram representing one example of track patterns from which data is reproduced and supplied to an embodiment of time base correcting apparatus according to the invention;

Figures 2A and 2B are timing diagrams representing various signals that are recorded as data and control tracks on a record medium;

Figure 3 is a diagram representing an arrangement of recording and reproducing heads;

Figure 4 is a block diagram of an embodiment of time base correcting apparatus according to the invention;

Figures 5A to 5D are respectively timing diagrams each used to explain a polyphase servo circuit used in one embodiment of time base correcting apparatus according to the invention;

Figures 6A to 6D are diagrams showing tables for a read-only memory for generating write-in block addresses used in one embodiment of the invention; and

Figures 7A to 7I and Figures 8A to 8G are timing diagrams used to explain one embodiment of the invention.

In the embodiment to be described, the invention is applied to a fixed head (or fixed transducer) type PCM tape recorder.

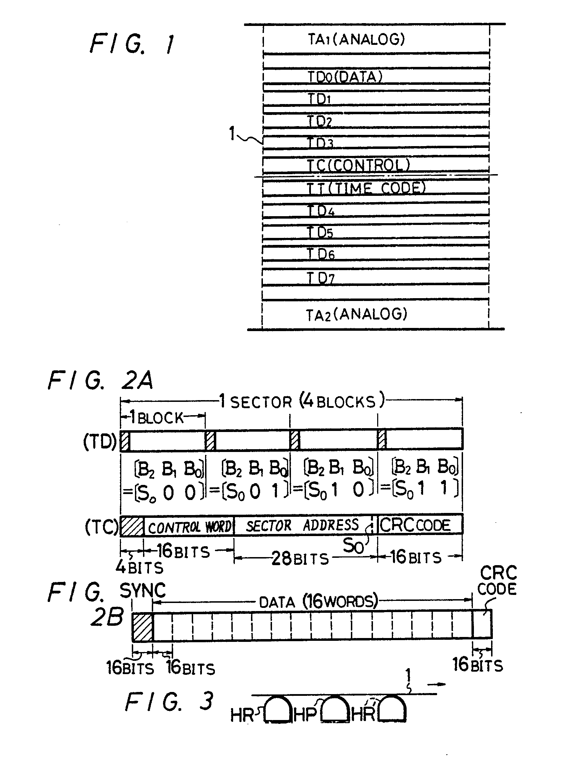

As shown in Figure 1, on a magnetic tape 1 of $\frac{1}{4}$-inch width are formed eight data tracks TD0 to TD7, two analog tracks, TA1 and TA2, a control track TC and a time code track TT. On the eight data tracks TD0 to TD7 are recorded respective audio PCM signals of eight channels, each being encoded in a predetermined way.

As illustrated in Figure 2a, the data tracks TD (TD0 to TD7) and the control track TC are coincident with each other in their recording positions for each sector in the width direction. One sector of each of the data tracks TD includes data of four blocks. As shown in Figure 2B, one block is formed of data of sixteen words, each word being formed of sixteen bits, a data synchronizing signal (shown by the hatched area in Figure 3B) added to the beginning of the data, and a cyclic redundancy check (CRC) code added to its end. A block address signal of three bits is inserted into the interval of the data synchronizing signal, and the block address signal and the data will both be checked for errors by the CRC code.

One sector of the control track TC comprises a synchronizing signal of four bits (shown by the hatched interval in Figure 2A), a control word of sixteen bits, a sector address signal of twenty-eight bits, and a CRC code of sixteen bits. The control word of sixteen bits is used to identify the sampling frequency of the PCM audio signal to be recorded and the recording format, and the sector address is the absolute address incrementing from zero address, both of which will be checked for errors by the CRC code. As a modulation method for recording the audio PCM signal on the data tracks TD, there is employed a modulation system for high density recording, while a frequency-modulation system or the like is employed to record a control signal on the control track TC. The least significant bit $S_0$ of the sector

address signal is arranged to be coincident with the most significant bit of each block address signal of four blocks. That is, the block address $(B_2, B_1, B_0)$ sequentially changes so as to appear as $(S_0 00)$, $(S_0 01)$, $(S_0 10)$ and $(S_0 11)$ in that sector.

As shown in Figure 3, there are provided magnetic heads or transducers comprising a recording head HR, a reproducing head HP and a recording head HR' which are sequentially located in that order relative to the direction in which the take 1 is transported. Each head has ten recording or reproducing magnetic gaps each arranged in line along the width direction of the tape 1, of which eight magnetic gaps correspond to the data tracks TD0 to TD7 and the other two magnetic gaps correspond to the control track TC and the time code track TT, respectively. The first recording on the tape 1 is carried out by the recording head HR, and in the case of sync-recording, cut-in/cut-out and so on, the recording head HR' is employed. The control track TC once written by the recording head Hr is not rewritten, but only the data tracks TD are rewritten.

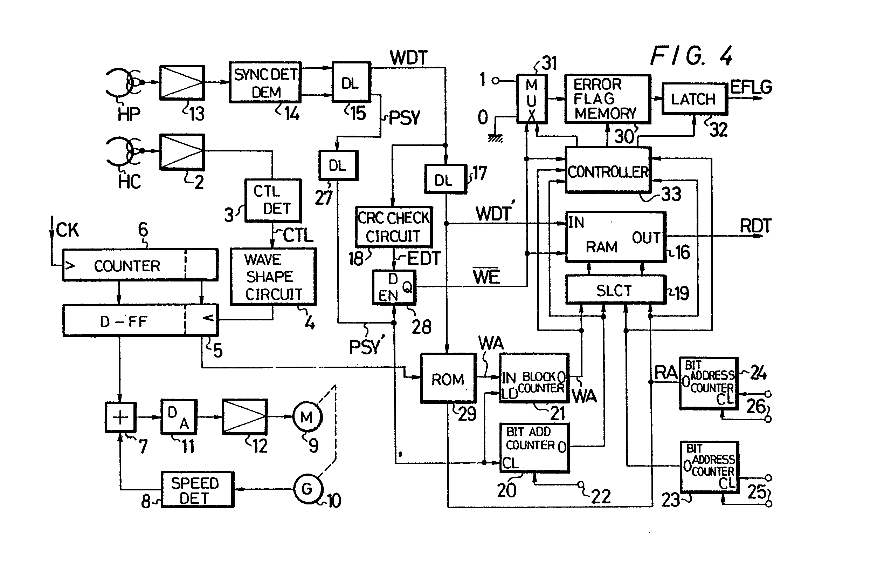

Figure 4 schematically illustrates the arrangement of an embodiment of time base correcting apparatus (TBC) according to the invention, in which a PCM signal is reproduced by the reproducing head HP from the data tracks TD, and the control track TC is reproduced by a control head HC.

The output from the control head HC is supplied through a reproducing amplifier 2 to a control (CTL) detection circuit 3 in which a CTL signal is detected by detecting a synchronizing signal of each sector. This CTL signal is supplied to a waveform shaping circuit 4 which then produces at its output a servo pulse signal. This servo pulse signal is supplied to a D-type flip-flop circuit 5 for phase comparison as its clock input.

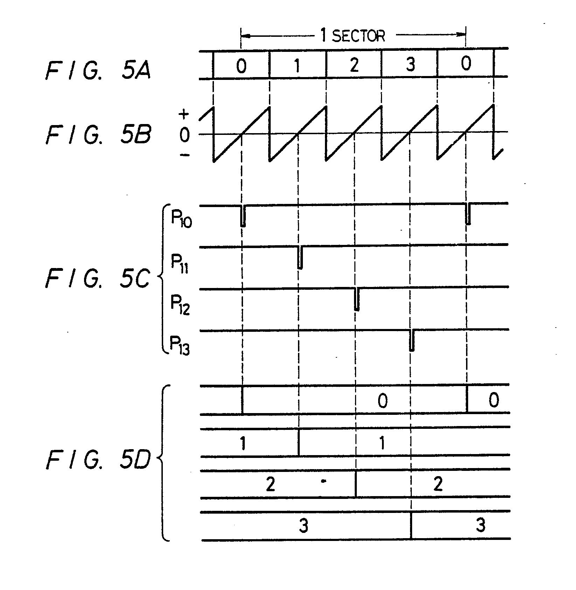

A counter 6 counts a clock pulse signal CK and a plurality of bits of the counter output, excluding the two most significant bits are parallel-supplied to the flip-flop circuit 5 as a reference signal. As illustrated in Figure 5A, the two most significant bits of the counter 6 repeatedly change with a cycle corresponding to one sector, so as to appear as 0, 1, 2 and 3, while as shown by a sawtooth wave in Figure 5B, the less significant bits thereof change their values stepwise at every clock pulse CK. The reference signal of which the value changes stepwise is formed on the basis of a 2's complement code, and the value thereof is changed symmetrically around the centre axis 0, which is repeated four times per sector.

The flip-flop circuit 5 is arranged to sample any one phase of the four-phase reference signal by the servo pulse signal, and then produces at its output a phase comparison output and a lock mode signal. The phase comparison output is supplied to an adder 7 and therein added to an output from a speed detection circuit 8. The detection of speed is carried out such that a signal with a frequency proportional to the rate of rotation of a capstan motor 9 is generated by a tachogenerator 10, and the frequency of this signal is converted in the speed detection circuit 8 into a corresponding level. The output from the adder 7 is converted by a D/A converter 11 into an analog signal which is then supplied through a servo amplifier 12 to the capstan motor 9, which is a DC motor.

With the servo circuit as so far described, the tape 1 is transported at the predetermined speed with its phase locked to the reference signal. This phase-lock can be with any one of the four phases of the 4-phase reference signal. In Figure 5C, $P_{10}$, $P_{11}$, $P_{12}$ and $P_{13}$ respectively denote servo pulses in the state of being phase-locked to zero mode, first mode, second mode and third mode. Since in the flip-flop circuit 5, the two most significant bits of the counter 6 are sampled, the flip-flop circuit 5 generates lock mode signals as shown in Figure 5D in response to the servo pulse signal with its phase locked to the zero mode to the third mode.

The reproduced data (which is considered as data of one channel for simplicity) from the reproducing head HP is supplied through a reproducing amplifier 13 to a sync detection and demodulation circuit 14 from which the reproduced data and the block synchronizing signal are supplied to a delay circuit 15. The delay circuit 15 is provided to match the time bases between the reproduced signal passing through the detection and demodulation circuit 14 and the lock mode signals generated from the flip-flop circuit 5. The reproduced data WDT and the reproduced synchronizing pulse PSY from the delay circuit 15 and the lock mode signals are supplied to the TBC.

A memory formed by a random-access memory (RAM) 16 is provided for the TBC. The reproduced data WDT is supplied to a delay circuit 17 and a CRC checker 18. The CRC checker 18 checks the block address signal and the data at every block for errors, and generates an error detection output EDT which takes a value "1" in the presence of an error and "0" in the absence of error.

The RAM 16 stores therein the data contained in one block, except the synchronizing signal and the block address signal (both of which are indicated as SYNC in Figures 2A and 2B) and is of a storage capacity of, for example, eight blocks to cover for possible jitter. This storage capacity of eight blocks enables the correction of jitter up to ±two blocks. The RAM 16 is supplied with input data WDT', that are derived through the delay circuit 17, a write in control pulse $\overline{WE}$, and an address from an address selector 19, and produces output data RDT. The address selector 19 is provided to select the write-in address or the read-out address and is switched at predetermined intervals. The write-in address and the read-out address are respectively formed of a bit address and a block address.

The write-in address is provided by a bit address counter 20 and a block address counter 21. A reproducing bit clock obtained from a clock extracting circuit (not shown) is supplied through a terminal 22 to the bit address counter 20. A reproduced sync pulse PSY' appearing at the output from a delay circuit 27 is supplied to a clear terminal CL of the bit address counter 20 and a load terminal LD of the block address counter 21. A flip-flop circuit 28 to which the error detection output EDT from the CRC checker 18 is supplied at its input D is supplied at its enable terminal EN with the reproduced sync pulse PSY', and the flip-flop circuit 28 produces at its output Q the write-in control pulse $\overline{WE}$. An address generation read-only memory (ROM) 29 is further provided to generate a write-in block address WA which is then supplied to the block address counter 21 at its parallel input IN and loaded therein by the reproduced sync pulse PSY' supplied thereto at its load terminal LD. The ROM 29 generates the predetermined block address WA on the basis of the reproduced block address BA and the lock mode signal from the flip-flop circuit 5. The read-out bit address is provided by a bit address counter 23 which is supplied with a reference bit clock through a terminal 25, while the read-out block address RA is produced by a block address counter 24 supplied with a reference block clock through a terminal 26. The read-out block address RA is supplied to the ROM 29 as mentioned before which then generates the write-in block address WA. Each of the address counters 23 and 24 is supplied at its clear terminal CL with a predetermined clear pulse.

An 8-bit error flag memory 30 is provided to which incoming data is supplied from a multiplexer 31. When the CRC checker 18 identifies that the data or the block address signal of a block contains an error, the error detection signal EDT takes the value "1" which causes the data of that block to be inhibited from being written. In other words, when the correct data is written in the correct block address BA, the multiplexer 31 is controlled by the write-in control pulse $\overline{WE}$ such that "0" is supplied to the error flag memory 30 upon write-in, while in other cases "1" is supplied thereto. The output from the error flag memory 30 is supplied to a latch 32 and the output from the latch 32 is supplied as an error flag EFLG. A controller 33 is provided which is supplied with the same address and write-in control pulse $\overline{WE}$ as those supplied to the RAM 16, whereby the error flag memory 30 is controlled in association with the operation of the RAM 16.

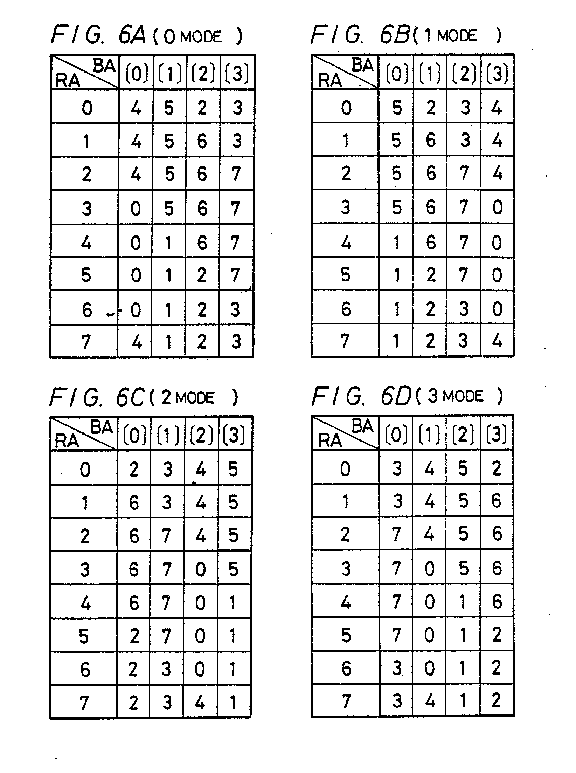

In the described embodiment, the 4-phase PLL servo is used, and the mode or phase to which the reproduced data is locked at any given time is indicated by the lock mode signal, so that the ROM 29 is arranged selectively to change the tables shown in Figures 6A, 6B, 6C and 6D in response to each mode.

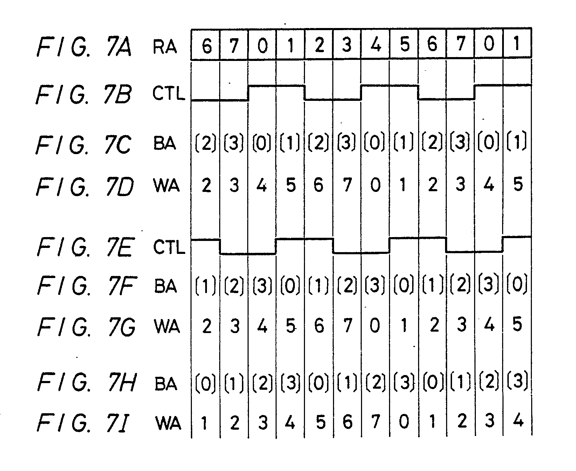

Since the servo reference signal and the read-out block address RA are in a constant phase relation, the read-out block address RA sequentially changes from zero to seven as shown in Figure 7A. If, now, the reproduced data is locked to the zero mode and contains no time base error, the reproduced control signal CTL has a phase as shown in Figure 7B. Then, the reproduced block address BA contained in the reproduced data WDT' varies sequentially so as to appear as (0) (1) (2) (3) as illustrated in Figure 7C. The ROM 29 employs the conversion table shown in Figure 6A and produces the write-in block address WA shown in Figure 7D on the basis of the read-out block address RA and the reproduced block address BA, which address WA is then loaded in the write-in block address counter 21. That is, the ROM 29 is controlled such that the write-in block address WA and the read-out block address RA have the maximum difference of four blocks between them. Thus, the TBC is capable of correcting errors up to ±two blocks and the data is delayed by four blocks by the TBC.

When the reproduced data is locked to the first mode, the control signal CTL has the phase shown in Figure 7E for the read-out block address RA of Figure 7A, and the reproduced block address BA becomes as shown in Figure 7F. In this case, in accordance with the conversion table of Figure 6B, the ROM 29 generates the write-in block address WA as shown in Figure 7G.

The reproduced control signal CTL and the reproduced block address BA have a constant phase relation, and this has nothing to do with the lock mode. But, if any positional displacement between the data track TD and the control track TC takes place due to skew of the tape 1, the above phase relation is varied. For example, there may occasionally occur a case in which relative to the control signal CTL shown in Figure 7E, the reproduced block address BA is delayed by one block as shown in Figure 7H. Even in such case, the ROM 29 can generate the write-in block address WA shown in Figure 7I on the basis of the conversion table shown in Figure 6B. Of course, due to the existence of time base error, the write-in-block address WA may sometimes be advanced or be delayed relative to the read-out block address RA, and if the time base error is in the correctable range (±two blocks), the read-out operation and the write-in operation do not overlap.

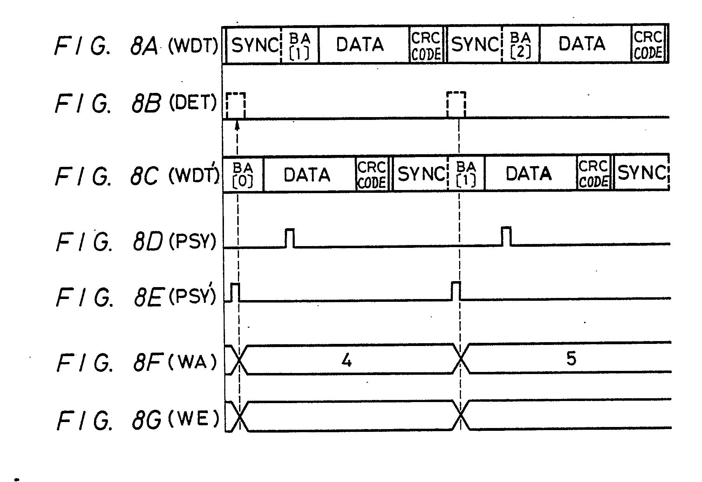

The TBC will be described in more detail with reference to Figures 8A to 8G. When the reproduced data WDT shown in Figure 8A is supplied from the delay circuit 15 to the CRC checker 18, the CRC checker 18 produces at the end of one block the error detection output EDT representing whether or not the block contains any error, as shown in Figure 8B. In Figure 8A, of the reproduced data WDT, there are illustrated two blocks in which the block addresses BA are (1) and (2). Accordingly, the error detection output EDT shown in Figure 8B is concerned with the blocks of the preceding block addresses (0) and (1), and when the block contains an error, the error detection output EDT takes a value "1" as shown by broken lines in Figure 8B. The reproduced sync pulse PSY shown in Figure 8D is supplied from the delay circuit 15. The bit pattern of the sync signal SYNC is selected not to appear in the data and is discriminated from the data, and so the sync signal detection circuit 14 detects this bit pattern and produces the sync pulse PSY. The sync pulse PSY is delayed by the delay circuit 27 so as to be substantially coincident with the error detection output EDT, and is thereby produced from the delay circuit 27 as a sync pulse PSY' shown in Figure 8E.

The bit address counter 20 is cleared by the sync pulse PSY' and the write-in block address WA from the ROM 29 is loaded in the block address counter 21 by the sync pulse PSY'. If, as mentioned before, the reproduced data is locked to the zero mode and has no jitter, in response to the block address BA of the reproduced data WDT' being varied to (0) and (1), the write-in block address WA is varied to four and five, respectively. In addition, since the sync pulse PST' is supplied to the enable terminal EN of the flip-flop circuit 28, the write-in control pulse $\overline{WE}$ therefrom is changed as shown in Figure 8G. The data is delayed by the delay circuit 17 such that the data is supplied to the RAM 16 after the error detection for that block has been carried out. If the error detection output EDT is at "1", the data of that block is inhibited from being written.

The error flag memory 30 stores the output from the multiplexer 31, the output becoming "0" when the RAM 16 is in the write-in mode and "1" in other modes. The error flag memory 30 is a memory of eight bits having eight addresses from 0 to 7 which are made coincident with the block address of the RAM 16 by supplying the write-in block address WA appearing at the output from the block address counter 21 to the controller 33. The error flag memory 30 is arranged to perform the write-in operation after it is confirmed that the write-in bit address of the RAM 16 takes the maximum value. The reason for this is that when an incorrect sync pulse due to the influence of noise and so on is reproduced as the reproduced sync pulse PSY, and the block address is changed before all the data of one block are written in the RAM 16, the "0" is inhibited from being written in the error flag memory 30.

The reading of the error flag memory 30 is started from the address that is coincident with the read-out block address RA from the block address counter 24. The read-out bit address is used to control the read-out timing of the error flag memory 30 and the latch timing of the latch 32. By way of example, the timing is controlled such that after one bit of the predetermined address of the specified block is read out at the beginning thereof, the latch operation is performed, so the error flag EFLG is produced from the latch 32. The read-out data RDT from the RAM 16 and the error flag EFLG are synchronized with each other and so, in the encoder of the next stage, the error correction is performed by using the error flag EFLG. In the read-out operation of the error flag memory 30, the output from the memory 30 is latched in the latch 32 and at the same time, "1" is at all times written in the present address (which is coincident with the read-out block address RA). This is because the data containing an error is inhibited from being written in the RAM 16, so that when the previously written data is read out again from the RAM 16, misoperation in which this data is processed as a correct data is avoided.

In this embodiment, the parity word is used as the error correction code and a single word error in one code block can be corrected by the modulo-2 addition of the other PCM words and the parity word.

As will be understood from the above description, since the polyphase PLL servo is employed, even when a plurality of relations exist between the reference signal and the reproduced data, it is possible to provide a TBC which does not narrow the correction range. Moreover, the delay in the TBC itself can be prevented from being varied by the lock mode, so there is no disadvantage in the case of sync-recording.

Unlike the above-described embodiment in which the error flag memory 30 is separate from the RAM 16 for data, the data and the error flag may be stored in a common memory.

## Claims

1. A time base corresponding apparatus for correcting time base errors in a digital signal supplied thereto in the form of successive data blocks, each data block including at least a plurality of data words and a block address which cycles with a predetermined phase relation to a reference signal, the apparatus comprising: memory means (16) having a plurality of addressable storage locations, each storing a respective data block; write address generating means (21, 29) responsive to said block address for generating write-in addresses to identify particular storage locations into which the supplied data blocks are to be written; write-in means (19) for writing successive data blocks into those storage locations identified by said write address generating means (21, 29); read address generating means (24) for generating read-out addresses to identify particular storage locations from which a stored data block is to be read out; read-out means (19) for reading out the contents of a storage location identified by said read address generating means (24); and means (29) contained in said write address generating means (21, 29) for varying said write-in address; characterised in that: said varying means (29) is operable to vary said write-in address in dependence on a lock mode signal, said lock mode signal indicating the phase relationship between the reference signal representing the sequence of block addresses in said digital signal and a further reference signal having a continuous time base so as to indicate the measure of discontinuity in the sequence of block addresses, said lock mode signal varying the write-in address to compensate for a discontinuity in the block address sequence such that the write-in address sequence is undisturbed.

2. Apparatus according to claim 1 wherein said write address generating means (21, 29) is arranged to generate a write-in address such that the sequence of write-in addresses is displaced relative to the sequence of read-out addresses by an amount dependent both on said lock mode signal and on the relationship between the sequences of said block addresses and said read-out addresses.

3. Apparatus according to claim 1 further comprising: a first tranducer (HP) for reproducing said digital signal from a recording medium (1); a second transducer (HC) for reproducing a control signal, said control signal being recorded on said recording medium (1) at intervals of a plurality of data blocks; servo means (5 to 12) for controlling transportation of said recording medium (1) to be locked to a predetermined phase relative to the reference signal by said reproduced control signal and generating said lock mode signal; and means for supplying said generated lock signal to said varying means (29).

4. Apparatus according to claim 3 further comprising: a counter (6) supplied with a clock signal having a constant frequency and producing a signal of which the value varies periodically; phase comparing means (5) for sample-holding an output signal from said counter (6) by said control signal; means for supplying part of the output derived from said phase comparing means (5) to said servo means (7 to 12); and means for supplying part of the output derived from said phase comparing means (5) to said varying means (29) as said lock mode signal.

5. Apparatus according to claim 1 wherein said write address generating means comprises a read-only memory (29) storing a conversion table, and said varying means selectively changes said conversion table.

## Patentansprüche

1. Zeitbasis-Korrekturanordnung zum Korrigieren von Zeitbasisfehlern in einem Digitalsignal, das dieser in Form von aufeinanderfolgenden Datenblöcken zugeführt wird, wobei jeder Datenblock mindestens mehrere Datenworte und eine Blockadresse enthält, die sich mit einer vorbestimmten Phasenbeziehung zu einem Referenzsignal zyklisch wiederholt, wobei die Korrekturanordnung aufweist:
— einen Speicher (16) mit mehreren adressierbaren Speicherplätzen, deren jeder einen jeweiligen Datenblock speichert,
— einem Schreibadressen-Generator (21, 29), der abhängig von der Blockadresse Einschreibadressen erzeugt, um besondere Speicherplätze zu identifizieren, in die die zugeführten Datenblöcke einzuschreiben sind,
— eine Einschreibeinrichtung (19) zum Einschreiben aufeinanderfolgender Datenblöcke in solche Speicherplätze, die durch den Schreibadressen-Generator (21, 29) identifiziert sind,

— einen Leseadressen-Generator (24) zum Erzeugen von Ausleseadressen, um besondere Speicherplätze zu identifizieren, aus denen ein gespeicherter Datenblock auszulesen ist,

— eine Ausleseeinrichtung (19) zum Auslesen der Inhalte eines Speicherplatzes, der durch den Leseadressen-Generator (24) identifiziert ist, und

— eine Einrichtung (29) in den Schreibadressengenerator (21, 29) zum Variieren der Einschreibadresse, dadurch gekennzeichnet, daß die Variier-Einrichtung (29) arbeitet, um die Einschreibadresse abhängig von einem Verriegelungsbetriebsartsignal zu variieren, welches Verriegelungsbetriebsartsignal die Phasenbeziehung zwischen dem Referenzsignal, das die Sequenz von Blockadressen in dem Digitalsignal repräsentiert, und einem weiteren Referenzsignal, mit kontinuierlicher Zeitbaisis anzeigt, um so das Maß der Diskontinuität in der Sequenz von Blockadressen anzuzeigen, wobei das Verriegelungsbetriebsartsignal die Einschreibadressen varriert, um eine Diskontinuität in der Sequenz von Blockadressen derart zu kompensieren, daß die Sequenz von Einschreibadressen ungestört ist.

2. Anordnung nach Anspurch 1, bei der der Schreibadressen-Generator (21, 29) so ausgebildet ist, daß er eine Einschreibadresse derart erzeugt, daß die Sequenz von Einschreibadressen relativ zu der Sequenz von Ausleseadressen um einen Betrag versetzt ist, der sowohl von dem Verriegelungsbetriebsartsignal als auch von der Beziehung zwischen den Sequenzen der Blockadressen und der Ausleseadressen abhängt.

3. Anordnung nach Anspurch 1, die desweiteren aufweist:

— einen ersten Wandler (HP) zum Wiedergeben des Digitalsignals von einem Aufzeichnungsmedium (1),

— einen zweiten Wandler (HC) zum Wiedergeben eines Steuersignals, welches Steuersignal auf dem Aufzeichnungsmedium (1) in Intervallen von mehreren Datenblöcken aufgezeichnet ist,

— eine Servoeinrichtung (5 bis 12) zum Steuern des Transports des Aufzeichnungsmediums (1), das in einer vorbestimmten Phasenlage relativ zu dem Referenzsignal durch das wiedergegebene Steuersignal zu verriegeln ist, und zum Erzeugen des Verriegelungsbetriebsartsignals sowie

— eine Einrichtung zum Zuführen des erzeugten Verriegelungsbetriebsartsignals zu der Variier-Einrichtung (29).

4. Anordnung nach Anspurch 3, die desweiteren aufweist:

—einen Zähler (6), dem ein Taktsignal mit konstanter Frequenz zugeführt wird und der ein Signal erzeugt, dessen Wert sich periodisch ändert,

— einen Phasenvergleicher (5) zum Abtasten und Halten eines Ausgangssignals vom Zähler (6) durch das Steuersignal,

— eine Einrichtung zum Zuführen eines Teils des Ausgangssignals von dem Phasenvergleicher (5) zu der Servoeinrichtung (7 bis 12) und

— eine Einrichtung zum Zuführen eines Teils des Ausgangssignals von dem Phasenvergleicher (5) zu der Variier-Einrichtung (29) als das Verriegelungsbetriebsartsignal.

5. Anordnung nach Anspurch 1, bei der der Schreibadressen-Generator einen Festwertspeicher (29) aufweist, der eine Umsetztabelle speichert, und die Variier-Einrichtung selektiv die Umsetztabelle ändert.

**Revendications**

1. Appareil de correction de base de temps servant à corriger les erreurs de base de temps dans un signal numérique qui lui est délivré sous la forme de blocs de données successifs, chaque bloc de données comportant au moins plusieurs mots de données et une adresse de bloc qui obéit cycliquement à une relation de phase prédéterminée avec un signal de référence, l'appareil comprenant:

un moyen de mémoire (16) possédant plusieurs emplacements d'emmagasinage adressables, chaque emplacement emmagasinant un bloc de données repectif;

un moyen de production d'adresses d'écriture (21, 29) qui répond à ladite adresse de bloc en produisant des adresses d'écriture afin d'identifier des emplacements d'emmagasinage particuliers dans lesquels les blocs de données délivrés doivent être écrits;

un moyen d'écriture (19) servant à écrire des blocs de données successifs dans les emplacements d'emmagasinage identifiés par ledit moyen de production d'adresses d'écriture (21, 29);

un moyen de production d'adresses de lecture (24) qui produit des adresses de lecture afin d'identifier des emplacements d'emmagasinage particuliers où un bloc de données emmagasiné doit être lu;

un moyen de lecture (19) servant à lire le contenu d'un emplacement d'emmagasinage identifié par ledit moyen de production d'adresses de lecture (24); et

un moyen (29) contenu dand ledit moyen de production d'adresses d'écriture (21, 29) servant à faire varier ladite adresse d'écriture; caractérisé en ce que:

ledit moyen de variation (29) a pour fonction de faire varier ladite adresse d'écriture en fonction d'un signal de mode de verrouillage, ledit signal de mode de verrouillage indiquant la relation de phase qui existe entre le signal de référence représentant la séquence d'adresses de bloc contenue dans ledit signal numérique et un signal de référence supplémentaires possédant une base de temps continue afin d'indiquer la mesure de discontinuité existant dans la séquence d'adresses de bloc, ledit signal de mode de verrouillage faisant varier l'adresse d'écriture afin de compenser la discontinuité dans la séquence d'adresses de bloc de telle manière que la séquence d'adresses d'écriture ne soit pas perturbée.

2. Appareil selon la revendication 1, où ledit moyen (21, 29) de production d'adresses d'écriture est conçu pour produire une adresse d'écriture de façon que la séquence d'adresse d'écriture soit déplacée, par rapport à la séquence d'adresses de lecture, d'une quantité qui dépend à la fois du signal de mode de verrouillage et de la relation existant entre les séquences desdites adresses de bloc et desdites adresses de lecture.

3. Appareil selon la revendication 1, comprenant en outre:

un premier transducteur (HP) servant à reproduire ledit signal numérique à partir d'un support d'enregistrement (1);

un deuxième transducteur (HC) servant à reproduire un signal de commande, le signal de commande étant enregistré sur le support d'enregistrement (1) à intervalles de plusieurs blocs de données;

un moyen d'aservissement (5 à 12) servant à commander le transport dudit support d'enregistrement (1) afin qu'il soit verrouillé su une phase prédéterminée relativement au signal de référence par ledit signal de commande reproduit et à produire ledit signal de mode de verrouillage; et

un moyen servant à délivrer ledit signal de verrouillage produit audit moyen de variation (29).

4. Appareil selon la revendication 3, comprenant en outre:

un compteur (6) recevant un signal d'horloge qui possède une fréquence constant et produisant un signal dont la valeur varie périodiquement;

un moyen (5) de comparaison de phase servant à échantillonner et maintenir un signal de sortie venant dudit compteur (6) à l'aide dudit signal de commande;

un moyen servant à délivrer une partie du signal de sortie produit à partir dudit moyen de comparaison de phase (5) à destination dudit moyen d'asservissement (7 à 12); et

un moyen servant à délivrer une partie du signal de sortie provenant dudit moyen de comparaison de phase (5) audit moyen de variation (29) au titre dudit signal de mode de verrouillage.

5. Appareil selon la revendication 1, où ledit moyen de production d'adresses d'écriture comprend une mémoire morte (29) emmagasinant une table de conversion, et ledit moyen de variation fait sélectivement varier ladite table de conversion.

0 086 658

**FIG. 1**

```
TA₁ (ANALOG)

TD₀ (DATA)
TD₁
TD₂
TD₃
TC (CONTROL)
TT (TIME CODE)
TD₄
TD₅
TD₆
TD₇

TA₂ (ANALOG)
```

1

**FIG. 2A**

1 SECTOR (4 BLOCKS)

1 BLOCK

(TD)

$[B_2\ B_1\ B_0]$ $[B_2\ B_1\ B_0]$ $[B_2\ B_1\ B_0]$ $[B_2\ B_1\ B_0]$
$=[S_0\ 0\ 0]$ $=[S_0\ 0\ 1]$ $=[S_0\ 1\ 0]$ $=[S_0\ 1\ 1]$

(TC) CONTROL WORD | SECTOR ADDRESS | CRC CODE

4 BITS — 16 BITS — 28 BITS — $S_0$ — 16 BITS

**FIG. 2B**

SYNC — DATA (16 WORDS) — CRC CODE

16 BITS   16 BITS                    16 BITS

**FIG. 3**

HR  HP  HR

1

F I G. 4

0 086 658

F I G. 5A

F I G. 5B

F I G. 5C

F I G. 5D

1 SECTOR

3

### F I G. 6A ( 0 MODE )

| RA \ BA | [0] | [1] | [2] | [3] |
|---|---|---|---|---|
| 0 | 4 | 5 | 2 | 3 |
| 1 | 4 | 5 | 6 | 3 |
| 2 | 4 | 5 | 6 | 7 |
| 3 | 0 | 5 | 6 | 7 |
| 4 | 0 | 1 | 6 | 7 |
| 5 | 0 | 1 | 2 | 7 |
| 6 | 0 | 1 | 2 | 3 |
| 7 | 4 | 1 | 2 | 3 |

### F I G. 6B ( 1 MODE )

| RA \ BA | [0] | [1] | [2] | [3] |
|---|---|---|---|---|
| 0 | 5 | 2 | 3 | 4 |
| 1 | 5 | 6 | 3 | 4 |
| 2 | 5 | 6 | 7 | 4 |
| 3 | 5 | 6 | 7 | 0 |
| 4 | 1 | 6 | 7 | 0 |
| 5 | 1 | 2 | 7 | 0 |
| 6 | 1 | 2 | 3 | 0 |
| 7 | 1 | 2 | 3 | 4 |

### F I G. 6C ( 2 MODE )

| RA \ BA | [0] | [1] | [2] | [3] |
|---|---|---|---|---|
| 0 | 2 | 3 | 4 | 5 |
| 1 | 6 | 3 | 4 | 5 |
| 2 | 6 | 7 | 4 | 5 |
| 3 | 6 | 7 | 0 | 5 |
| 4 | 6 | 7 | 0 | 1 |
| 5 | 2 | 7 | 0 | 1 |
| 6 | 2 | 3 | 0 | 1 |
| 7 | 2 | 3 | 4 | 1 |

### F I G. 6D ( 3 MODE )

| RA \ BA | [0] | [1] | [2] | [3] |
|---|---|---|---|---|
| 0 | 3 | 4 | 5 | 2 |
| 1 | 3 | 4 | 5 | 6 |
| 2 | 7 | 4 | 5 | 6 |
| 3 | 7 | 0 | 5 | 6 |
| 4 | 7 | 0 | 1 | 6 |
| 5 | 7 | 0 | 1 | 2 |
| 6 | 3 | 0 | 1 | 2 |
| 7 | 3 | 4 | 1 | 2 |

| | | | | | | | | | | | | | |
|---|---|---|---|---|---|---|---|---|---|---|---|---|---|
| *FIG. 7A* | RA | 6 | 7 | 0 | 1 | 2 | 3 | 4 | 5 | 6 | 7 | 0 | 1 |
| *FIG. 7B* | CTL | | | | | | | | | | | | |
| *FIG. 7C* | BA | (2) | (3) | (0) | (1) | (2) | (3) | (0) | (1) | (2) | (3) | (0) | (1) |
| *FIG. 7D* | WA | 2 | 3 | 4 | 5 | 6 | 7 | 0 | 1 | 2 | 3 | 4 | 5 |
| *FIG. 7E* | CTL | | | | | | | | | | | | |
| *FIG. 7F* | BA | (1) | (2) | (3) | (0) | (1) | (2) | (3) | (0) | (1) | (2) | (3) | (0) |
| *FIG. 7G* | WA | 2 | 3 | 4 | 5 | 6 | 7 | 0 | 1 | 2 | 3 | 4 | 5 |
| *FIG. 7H* | BA | (0) | (1) | (2) | (3) | (0) | (1) | (2) | (3) | (0) | (1) | (2) | (3) |
| *FIG. 7I* | WA | 1 | 2 | 3 | 4 | 5 | 6 | 7 | 0 | 1 | 2 | 3 | 4 |

FIG. 8A (WDT)

FIG. 8B (DET)

FIG. 8C (WDT')

FIG. 8D (PSY)

FIG. 8E (PSY')

FIG. 8F (WA)

FIG. 8G (WE)